Europäisches Patentamt

European Patent Office

Office européen des brevets

(19)

(11) Veröffentlichungsnummer : **0 123 856**
**B1**

(12) ## EUROPÄISCHE PATENTSCHRIFT

(45) Veröffentlichungstag der Patentschrift :
20.08.86

(51) Int. Cl.⁴ : **B 01 D 53/34**

(21) Anmeldenummer : 84102908.5

(22) Anmeldetag : 16.03.84

(54) Verfahren zur Entfernung bzw. Isolierung von Schadstoffen aus Abgasen.

(30) Priorität : 26.04.83 DE 3314969

(43) Veröffentlichungstag der Anmeldung :
07.11.84 Patentblatt 84/45

(45) Bekanntmachung des Hinweises auf die Patenterteilung : 20.08.86 Patentblatt 86/34

(84) Benannte Vertragsstaaten :
BE CH FR GB LI NL SE

(56) Entgegenhaltungen :
DE-A- 2 248 256
DE-A- 2 809 357

(73) Patentinhaber : Müller, Dietrich, Dr.
Handelmannweg 1
D-2000 Hamburg 52 (DE)

(72) Erfinder : Müller, Dietrich, Dr.
Handelmannweg 1
D-2000 Hamburg 52 (DE)

(74) Vertreter : UEXKÜLL & STOLBERG Patentanwälte
Beselerstrasse 4
D-2000 Hamburg 52 (DE)

**Beschreibung**

Die Erfindung betrifft ein Verfahren zur Entfernung bzw. Isolierung von $SO_2$, insbesondere auch von Schadstoffen wie andere Schwefelverbindungen und Metallverbindungen, aus Abgas, insbesondere Rauchgas, durch Kontaktierung des schadstoffhaltigen Abgases mit einer wässrigen Bindemittelsuspension.

Die Entfernung von Schadstoffen aus Rauch- und sonstigen Abgasen auf wirtschaftliche Weise ist bislang ungelöst. Es gibt zwar zahlreiche Verfahren für die selektive Entfernung und Schwefeldioxid aus Rauchgasen, wie Waschverfahren mit Natriumsulfitlösung oder mit wässrigen Ammoniaklösungen bei 60 bis 70 °C und anschließender thermischer Regeneration sowie Waschverfahren mit verdünnter Schwefelsäure oder mit Calciumsulfitlösungen, die jedoch den Nachteil haben, daß die eingesetzten Kontaktierlösungen aufgrund ihrer korrordierenden Eigenschaften einen erheblichen apparativen Aufwand erfordern. Die weiteren bekannten trocknen Sorptionsverfahren z. B. gemäß AT-PS-283 289, bei denen speziell hergestellte meist hydroxydische Absorptionsmassen eingesetzt werden, die nach der Schwefelaufnahme regeneriert und unter erheblichen Transportaufwand zwischen dem Absorptionsort, beispielsweise dem Kraftwerk, und dem Regenerationsort, beispielsweise einer Schwefelsäurefabrik, hin- und herbewegt werden müssen, sind ebenfalls aufwendig und daher unwirtschaftlich, insbesondere weil zum Abrösten erhebliche Koksmengen erforderlich sind.

Ein grundsätzlicher Nachteil dieser im wesentlichen für die Brennstoffentschwefelung oder Rauchgasentschwefelung vorgeschlagenen Verfahren beruht darauf, daß andere im Abgas vorhandenen Schadstoffe, wie Schwermetalle nicht entfernt werden.

Ferner ist aus der DE-A-22 37 929 ein Verfahren bekannt, um gasförmige organische Abgase oder mindestens organische Bestandteile enthaltende Abgase durch Biomasse zu entfernen. Hierbei kann als Biomasse auch aktivierter Klärschlamm eingesetzt werden, damit die organischen Schadstoffe in den Abgasen, wie sie in der Lebensmittelindustrie anfallen, über den Stoffwechsel von Mikroorganismen abgebaut werden.

Letztlich ist es aus der DE-A-22 48 256 bekannt, Abluft zu filtrieren, wobei als festes Filtermaterial biologisch aktivierte humifizierte Stoffe eingesetzt werden.

Die Erfindung hat sich die Aufgabe gestellt, die Entfernung von Schadstoffen bzw. deren Isolierung aus Abgasen mit einem Verfahren der eingangs erwähnten Art auf wirtschaftliche Weise zu lösen und sich nicht nur auf die Entschwefelung zu beschränken sondern auch andere feste, flüssige und gasförmige Schadstoffe wie giftige Substanzen wirksam zu entfernen. Ferner soll zum Binden der Schadstoffe als Sorbens ein Produkt eingesetzt werden, das selber als zu beseitigendes Abfallprodukt ohne Wert ist, also wohlfeil und einsatzbereit und unter erheblich geringeren Aufbereitungs- und Transportkosten eingesetzt werden kann, und das letztlich nicht nur eine Entschwefelung sondern auch eine Beseitigung anderer Schadstoffe ermöglicht und diese in regenerierbarer Form wieder zur Verfügung stellen kann. Darüberhinaus soll das Abrösten wirtschaftlicher gestaltet werden.

Überraschenderweise wird diese Aufgabe dadurch gelöst, daß man die an sich bekannte Kontaktierung der Abgase mit wässrigen Bindemittelsuspensionen so durchführt, daß als Bindemittelsuspension ein ausgefaulter Klärschlamm eingesetzt wird.

Hierdurch ergibt sich der Vorteil, daß einmal ein Massenabfallstoff sinnvoll eingesetzt werden kann, und daß auch die in diesem Abfallstoff vorhandenen Schadstoffe zusätzlich mit den in den Abgasen vorhandenen Schadstoffen letztlich in brauchbarer Form wieder zu gewinnen sind. Ein weiterer Vorteil besteht darin, daß der erfindungsgemäß eingesetzte Klärschlamm bereits einen erheblichen Kohlenstoffgehalt besitzt, so daß zum Abrösten kein oder ein sehr viel geringerer Kokszuschlag erforderlich ist.

Es ist überraschend, daß ausgefaulter Klärschlamm zur Entfernung von Schadstoffen aus $SO_2$-haltigen Abgasen eingesetzt werden kann, da bei dem bekannten Verfahren gemäß DE-A-22 37 929 mit aktiviertem Klärschlamm keine Schadstoffentfernung möglich ist. Dieses beruht vermutlich darauf, daß die Mikroorganismen durch $SO_2$ in ihrer Wirksamkeit abgetötet werden, während bei dem erfindungsgemäßen Verfahren das $SO_2$ aus den Abgasen oxidiert wird, wobei die im ausgefaulten Klärschlamm vorhandenen mehrwertigen Metalle wie beispielsweise Eisen vermutlich katalytisch wirken ; es werden hierbei Sulfate erhalten. Teilweise werden die im ausgefaulten Klärschlamm vorhandenen Sulfide durch das $SO_2$ in Schwefelwasserstoff umgewandelt, woraus sich durch eine Oxydoreduktion elementarer Schwefel bildet, der wiederum über Thioverbindungen die im Abgas vorhandenen Stickoxide zu binden vermag. Die giftigen Schwermetalle werden entweder sulfatisch wie beispielsweise Blei bzw. sulfidisch wie beispielsweise Arsen, Kadmium oder Quecksilber gebunden.

Besonders vorteilhaft ist die Verwendung eines Klärschlammes, der mit zerkleinertem getrockneten Herbstlaub oder mit dem Extraktionsrückstand solchen Herbstlaubes versetzt ist.

Bei Einsatz einer vorzugsweise ausgefaulten Klärschlammsuspension mit zerkleinertem Herbstlaub erhöht sich der Kohlenstoffgehalt des Klärschlamms, der bezogen auf die trockene Substanz etwa 30 bis 40 % beträgt, wodurch das Sorptionsvermögen insbesondere gegenüber gasförmigen und feinen festen Schadstoffen, erhöht wird.

Als Klärschlamm können sowohl der bei Klärwerken anfallende Klärschlamm aus der Abwasserbehandlung als auch andere Wasserschlämme wie beispielsweise die bei der Fluß- oder Hafenreinigung anfallenden Baggerschlämme verwendet werden. Der Klärschlamm kann gegebenenfalls unter geringer Aufarbeitung durch Zusatz von Wasser oder anderen Zuschlagstoffen, insbesondere alkalisch wirkenden z. B. kalkhaltigen Stoffen aufgearbeitet werden und wird dann mit dem zu reinigenden Abgas in innigen Kontakt gebracht. Dieses kann entweder dadurch erfolgen, daß man das Abgas durch die Klärschlammsuspension durchleitet oder daß man die wässrige Klärschlammsuspension beispielsweise im Gegenstrom in das Abgas einsprüht. Gegebenenfalls kann der Klärschlamm auch mit dem Presswasser aus einer Brikettiervorrichtung zum Verpressen von mit Herstlaub versetztem Klärschlamm suspendiert werden.

Es ist überraschend, daß man weitgehend alle Schadstoffe einschließlich Schwefelverbindungen aus Rauch und sonstigen Abgasen mit Klärschlamm entfernen kann, und daß bei dem erfindungsgemäßen Verfahren auch die in dem Klärschlamm ursprünglich enthaltenen Schadstoffe zusammen mit den vom Abgas aufgenommenen Schadstoffen anfallen. Dieser Vorteil verstärkt sich noch, wenn als Brennmaterial stark schadstoffhaltige Brennziegel aus mit Herbstlaub behandeltem Klärschlamm verwendet werden.

Die Klärschlammsuspension wird vorzugsweise in einer 2 bis 20 %igen wässrigen, beispielsweise 10 %igen Aufschlämmung eingesetzt; hierbei kann der Klärschlamm im Kreislauf geführt und ein Teil davon abgezogen werden. Die beladene Klärschlammasse wird anschließend auf an sich bekannte Weise abgeröstet, wobei ihr erheblicher Kohlenstoffgehalt die reduzierende Abröstung unterstützt, so daß metallische Schadstoffe in elementarer Form anfallen und ferner ein $SO_2$-Reichgas bzw. Schwefel gewonnen werden können. Anstelle des reduzierenden Röstens können die Metalle auch durch Säuren ausgelaugt und auf an sich bekannte andere Weise z. B. elektrolytisch isoliert werden.

Da der Klärschlamm eine Reihe von an sich wertvollen Schwermetallen wie z. B. Blei, Cadmium, Chrom, Kupfer, Eisen, Mangan, Nickel, Quecksilber und Zink in sehr geringen Mengen enthält, besteht nach wie vor ein beträchtliches Aufnahmeverögen gegenüber den bei der Verbrennung anfallenden Schadstoffen. Außer diesen zum Teil amphoteren Schwermetallen enthält der Klärschlamm noch basische Metalle, wie Calcium, Kalium, Magnesium und Natrium in wesentlich höherer Konzentration; diese vermutlich in reaktionsfähiger hydratisierter Oxidverbindung vorliegenden Metalle begünstigen als basische Bestandteile die $SO_2$ Aufnahme, während die amphoteren Schwermetallverbindungen als Sauerstoffdonatoren dienen.

Da das Aufnahmevermögen des Klärschlammes für Schadstoffe erheblich ist, und dieser Klärschlamm noch eigene vorwiegend metallische Schadstoffe zusätzlich zu den aus dem Abgas aufgenommenen Schadstoffen liefert, werden letztlich vollbeladene Schlämme mit einer gewinnungswürdigen Konzentration an metallischen Schadstoffen erhalten, die wie beispielsweise Pyrit abgeröstet werden können, jedoch den Vorteil haben, daß wegen des in dem Klärschlamm bereits vorhandenen hohen Kohlenstoffgehaltes von z. B. 40 % ein beträchtlicher Heizwert und ein willkommenes Reduktionspotential mitgeliefert werden.

Ein wesentlicher Vorteil des erfindungsgemäßen Verfahrens beruht darin, daß man mit einem an sich nicht nutzbaren Klärschlamm eine gute Abgasreinigung ermöglichen und ferner die umweltbelastenden Schadstoffe aus dem Klärschlamm und die aus den Abgasen gemeinsam entfernen kann. Ein weiterer Vorteil des Verfahrens besteht darin, daß die Sorptionsmasse nicht regeneriert werden muß, da Klärschlamm als ständig anfallendes Abfallprodukt unbegrenzt und praktisch überall zur Verfügung steht; es genügt also, nur die Schadstoffe zu isolieren und die von diesen befreite Asche nach der Röstung zu verwerfen oder anderen Zwecken zuzuführen, wie beispielsweise zur Herstellung von porösen Bauteilen oder als Bodenverbesserungsmittel.

Vorzugsweise wird gemäß Erfindung die Klärschlammsuspension derart durch die im Gegenstrom geleiteten heißen Abgase geführt, daß der Klärschlamm teilweise getrocknet wird, so daß er in einem Teil der Bindestrecke in flüssiger und in einem weiteren Teil in fester bzw. feuchtfester Form vorliegt, wodurch die Schadstoffe in zwei verschiedenen Stufen und in unterschiedlichen Aggregatzuständen des Bindemittels aufgenommen werden.

Eine weitere besonders wirksame Verfahrensvariante bei der Schadstoffsorption aus Abgasen wird dadurch erreicht, daß man der Schlammsuspension die Asche aus Brennziegeln zusetzt, die aus beladendem Schlamm und einer zweiten kohlenstoffhaltigen Komponente in Form von Massenabfällen in Anlehnung an das Verfahren gemäß DE-A-32 43 827 hergestellt wurden.

Überraschenderweise hat sich nämlich gezeigt, daß bereits schadstoffbeladene Wasserschlämme bzw. deren wässrige Suspensionen bei Zusatz von z. B. Herbstlaub bzw. dessen Extraktionsrückstand, Stroh oder Müll gleichermaßen zu Brennziegeln verarbeitet werden können.

Wird die Asche aus solchen Brennziegeln einer Schlammsuspension zugesetzt, so wird deren schadstoffsorbierende Wirkung — wiederum überraschend — wesentlich erhöht. Solche Aschen reagieren nämlich in wässriger Suspension alkalisch und nicht sauer, was angesichts der ursprünglichen $SO_2$-Beladung der zur Brennziegelherstellung verwendeten Schlämme eher zu erwarten gewesen wäre.

Offenbar wandelt sich ein Teil der Inhaltstoffe aus dem Feststoffzusatz und dem Schlamm in gebrannte Oxide um, die in der Suspension alkalische Puffer darstellen. Außerdem findet wahrscheinlich mit Hilfe der kohlenstoffhaltigen Inhaltstoffe des Ziegels ein reduzierender Aufschluß der bei der Beladung der Schlammsuspension entstandenen Verbindungen statt.

Setzt man derartige Aschen einer Schlammsuspension zu, so addieren sich die Sorptionsaktivitäten der beiden Bestandteile, Schlamm und Asche, indem die Alkalität beträchtlich heraufgesetzt wird ; die nun chemisch reduzierten Inhaltstoffe weisen insbesondere für die Aufnahme von $SO_2$ und $NO_x$ wesentlich erhöhte Aktivitäten auf.

Für die Praxis besteht somit ein sehr wichtiger Zusammenhang zwischen der Abgasreinigung durch Schlämme und der Herstellung von Brennziegeln aus Schlamm und Abfallfeststoff :

Geht man nämlich zunächst vom Einsatz wässriger Schlammsuspensionen zur Bindung von $SO_2$ und anderen Schadstoffen der Abgase aus, so erhält man eine mit diesen Schadstoffen beladene Suspension. Setzt man Feststoffabfall der genannten Art hinzu, so lassen sich Brennziegel herstellen, diesmal mit einer Suspension, bei der die Aufnahme von Schadstoffen bereits erfolgt ist.

Brennt man solche Ziegel unter Wärmegewinn ab, so sind in den Rauchgasen dieser Verbrennung weder $SO_2$ noch $H_2S$ noch andere schädliche Gase beobachtet worden.

Die so gewonnene Asche wird nun als besonders wirksames Sorbens dem Suspensionskreislauf der Abgasreinigung zugeführt, gegebenenfalls unter Zusatz von Wasser. Dadurch vermehrt sich die schadstoffbindende Sorptionsmasse laufend und wird wesentlich aktiver. Die umlaufende Suspension zieht man von Zeit zu Zeit ab und beginnt mit dem Zyklus von neuem.

Aus solchen beladenen Suspensionen werden auch nach dem Abtrocknen nach Zusatz starker Säuren wie Schwefelsäure keine Gasentwicklung oder Gerüche wahrgenommen. Dies läßt den Schluß zu, daß bei der Schadstoffbeladung der Schlämme insoweit nur unzersetzliche Verbindungen entstehen, deren Deponie gefahrlos erfolgen kann. Falls durch den mehrfachen Umlauf der Suspension die darin aufgenommenen Schadstoffe so angereichert worden sind, daß eine Gewinnung brauchbarer Produkte lohnend ist, wird man die Aufbereitung der beladenen Massen einer Deponie vorziehen.

Wenn man das Verfahren so durchführt, daß man die Abgasreinigung in einem gleichzeitig als Esse wirkenden Reinigungsabsorber durchführt, können die bislang sehr hoch ausgeführten Schornsteine kürzer ausgebildet werden oder gänzlich anders z. B. zur Gewinnung von Abgaswärme gestaltet werden.

Im folgenden soll die Erfindung anhand von Beispielen näher erläutert werden.

Beispiel 1

Es wurde ein künstliches Rauchgas mit einem Gehalt von etwa 1 Gew. % $SO_2$ mit restlicher Luft mittels einer Wasserstrahlpumpe durch zwei Gaswaschflaschen geleitet von denen die erste mit einer 10 %igen Klärschlammsuspension und die zweite mit einer Jod-Stärke-Lösung gefüllt war. Die blaue Jod-Stärke-Lösung entfärbt sich momentan, sobald erste Spuren von $SO_2$ in sie gelangen. Dies erfolgt erst nach einer Standzeit von etwa 40 Minuten ; d. h. die Klärschlammsuspension hatte bis dahin das $SO_2$ 100 %ig aus dem Gasstrom entfernt.

Die beladene Klärschlammsuspension wurde getrocknet und in einem Porzellanrohr über einer Bunsenflamme im Sauerstoffatom erhitzt. Die erhaltenen Röstgase wurden in einer Gaswaschflasche mit $H_2O_2$ haltiger NaOH-Lösung bekannter Stärke aufgefangen. Durch Rücktitration wurde ein $H_2SO_4$-Gehalt festgestellt, der recht genau der sorbierten Menge $SO_2$ entsprach. Dieser Versuch zeigt, daß das von der Klärschlammsuspension sorbierte $SO_2$ sich leicht regenerieren läßt.

Beispiel 2

In einem kleinen Versuchsofen wurden zwei Brennstoffziegel aus Klärschlamm und gefallenem Herbstlaub gemäß DE-OS-3 243 827, denen zusätzlich noch eine geringe Menge einer Bleiverbindung zugesetzt war, abgebrannt. Die anfallenden Rauchgase wurden durch eine 0,1n $H_2SO_4$ enthaltende Gaswaschflasche geleitet, in der deutlich Schwermetalle nachgewiesen wurden.

Nun wurden die Abgase vorher durch eine Gaswaschflasche geleitet, die eine Klärschlammsuspension enthielt. In der nachgeschalteten $H_2SO_4$ enthaltenden Waschflasche konnten keine Schwermetalle mehr nachgewiesen werden, was bedeutet, daß die Klärschlammsuspension die Schwermetalle völlig gebunden hatte.

Die beladene Klärschlammsuspension wurde nach Trocknen in einem Mörser zerkleinert und auf einem Asbest-Drahtnetz einer Bunsenflamme ausgesetzt. Es entstanden mehrere kleine Reguli aus elementarem Blei, was bedeutet, daß die von der Klärschlammsuspension aufgenommenen Schadstoffe aufgrund des im Klärschlamm vorhandenen reduzierend wirkenden Kohlenstoffs elementar wiedergewonnen werden können.

Allgemein kann man im großtechnischen Verfahren den Klärschlamm gegebenenfalls mit weiteren Zusätzen und dem Preßwasser aus einer Klärschlammbrikettieranlage als Suspension einem Abgasreiniger zuführen, der zwischen der Abgasseite eines Dampfkessels und der Esse installiert ist und von heißen Rauchgasen von unten nach oben über ein Innenrohr durchströmt wird. Diesem vom Innenrohr radial nach außen ringförmig verteilten Abgasstrom wird die Klärschlammsuspension von oben nach unten ebenfalls ringförmig entgegengesprüht und dadurch innig mit dem Abgas verwirbelt, so daß es dessen Schadstoffe in zunächst flüssiger Phase aufnimmt. Gleichzeitig wird die Suspension durch die Wärme des Abgases abgetrocknet, so daß der obere Teil des Abgasreinigers außerdem wie ein Sprühtrockner arbeitet. Die feuchtfeste Phase des Klärschlammes bildet im unteren Teil des Abgasreinigers eine ringförmig abwärts sinkende Wanderschicht, die gleichermaßen quer von innen nach außen vom Abgas durchströmt wird und bereits hier dessen Schadstoffe und Flugasche aufnimmt. Bei weiterem Abtrocknen wird die beladene feste Klärschlammmasse mit den sorbierten Schadstoffen aus dem Abgasreiniger ausgetragen, um anschließend — gegebenenfalls nach einer teilweisen Kreislaufführung zur Suspensionsaufbereitung — in voll beladenem Zustand der Isolierung der Schadstoffe zugeführt zu werden.

## Patentansprüche

1. Verfahren zur Entfernung bzw. Isolierung von SO₂, insbesondere auch von Schadstoffen wie andere Schwefelverbindungen und Metallverbindungen, aus Abgas, insbesondere Rauchgas, durch Kontaktierung des schadstoffhaltigen Abgases mit einer wässrigen Bindemittelsuspension, dadurch gekennzeichnet, daß als Bindemittelsuspension ein ausgefaulter Klärschlamm eingesetzt wird.

2. Verfahren nach Anspruch 1, dadurch gekennzeichnet, daß ein mit zerkleinertem getrockneten Herbstlaub oder mit dem Extraktionsrückstand solchen Herbstlaubes versetzter Klärschlamm als Bindemittelsuspension eingesetzt wird.

3. Verfahren nach Anspruch 1 bis 2, dadurch gekennzeichnet, daß man der Klärschlammsuspension noch alkalisch wirkende Zuschlagstoffe zusetzt.

4. Verfahren nach Anspruch 1 bis 3, dadurch gekennzeichnet, daß man das Abgas durch die Klärschlammsuspension durchleitet oder diese in das Abgas einspritzt.

5. Verfahren nach Anspruch 1 bis 4, dadurch gekennzeichnet, daß man eine 2 bis 20 %ige wässrige Klärschlammsuspension verwendet.

6. Verfahren nach Anspruch 1 bis 5, dadurch gekennzeichnet, daß die Klärschlammsuspension derart durch die im Gegenstrom geleiteten heißen Abgase geführt wird, daß der Klärschlamm teilweise getrocknet wird und in einem Teil der Bindestrecke in flüssiger und in einem weiteren Teil in fester bzw. feuchtfester Form vorliegt.

7. Verfahren nach Anspruch 1 bis 6, dadurch gekennzeichnet, daß man die Abgasreinigung in einem gleichzeitig als Esse wirkenden Reinigungsabsorber durchführt.

8. Verfahren nach Anspruch 1 bis 7, dadurch gekennzeichnet, daß der mit Schadstoffen beladene Klärschlamm mit getrocknetem Herbstlaub, dessen Extraktionsrückstand oder anderen kohlenstoffhaltigen Massenabfällen wie Stroh oder Müll zu Brennstoffziegeln verarbeitet wird.

9. Verfahren nach Anspruch 1 bis 8, dadurch gekennzeichnet, daß die nach dem Abbrennen der aus beladenem Klärschlamm hergestellten Brennziegel erhaltene Asche wiederum der zur Abgasreinigung eingesetzten Klärschlammsuspension zugesetzt wird.

10. Verfahren nach Anspruch 1 bis 9, dadurch gekennzeichnet, daß die Schadstoffe des mit diesen beladenen Klärschlammes durch reduzierendes Rösten und/oder elektrolytisch isoliert werden.

## Claims

1. Process for removing or separating SO₂, especially also pollutants such as other sulphur compounds or metal compounds from waste gas, especially flue gas by contacting the waste gas with a binder suspension, characterized in that a digested sewage sludge is used as binder suspension.

2. Process according to claim 1, characterized in that a binder suspension is used which comprises a sewage sludge mixed with comminuted dried autumn leaves or with the extraction residue of such autumn leaves.

3. Process according to claims 1-2, characterized in that an alkaline additive substance is added to the sewage sludge suspension.

4. Process according to claims 1-3, characterized in that the waste gas is passed through the sewage sludge suspension or that said suspension is injected into the waste gas.

5. Process according to claims 1-4, characterized in that there is used a 2-20 % aqueous sewage sludge suspension.

6. Process according to claims 1-5, characterized in that the sewage sludge suspension is passed through the hot waste gases in counterflow in such a way that the sewage sludge is partially dried and in one part of the binding zone is present in liquid form and in a further part is present in solid or wet solid form.

7. Process according to claims 1-6, characterized in that the waste gas cleaning is carried out in a cleaning absorber simultaneously acting as a stack.

8. Process according to claim 7, characterized in that the sewage sludge loaded with pollutants is processed with dried autumn leaves or the extraction residue thereof or with other carbonaceous mass waste such as straw or refuse to fuel briquettes.

9. Process according to claims 1-8, characterized in that the ash obtained by burning the fuel briquettes made from loaded sewage sludge is again added to the sewage sludge suspension for waste gas cleaning.

10. Process according to claims 1-9, characterized in that the pollutants of the sewage sludge being loaded therewith are isolated by reducing roasting and/or electrolytically.

## Revendications

1. Procédé pour enlever ou isoler du SO₂, notamment également des substances polluantes comme d'autres composés soufrés et des composés métalliques, à partir d'un gaz effluent, notamment de fumées, en amenant le gaz effluent contenant des substances polluantes en contact avec une suspension aqueuse de liant, caractérisé en ce que l'on utilise comme suspension de liant une boue de clarification putréfiée.

2. Procédé selon la revendication 1, caractérisé en ce que l'on utilise comme suspension de liant une boue de clarification mélangée à du feuillage d'automne séché et broyé, ou bien avec le résidu d'extraction d'un tel feuillage d'automne.

3. Procédé selon la revendication 1 ou 2, caractérisé en ce que l'on ajoute à la suspension de boue de clarification encore des additifs à action alcaline.

4. Procédé selon la revendication 1 à 3, caractérisé en ce que l'on fait passer le gaz effluent au-travers de la suspension de boue de clarification ou bien on pulvérise celle-ci dans le gaz effluent.

5. Procédé selon la revendication 1 à 4, caractérisé en ce que l'on utilise une suspension de boue de clarification aqueuse à 2 à 20 %.

6. Procédé selon la revendication 1 à 5, caractérisé en ce que l'on fait passer la suspension de boue de clarification au travers des gaz effluents chauds s'écoulant à contre-courant, de telle sorte que la boue de clarification soit en partie séchée et se présente dans une partie de la voie de fixation sous une forme liquide, et dans une autre partie sous une forme solide ou humide et solide.

7. Procédé selon la revendication 1 à 6, caractérisé en ce que l'on effectue l'épuration du gaz effluent dans un absorbeur d'épuration remplissant simultanément la fonction de cheminée.

8. Procédé selon la revendication 1 à 7, caractérisé en ce que la boue de clarification chargée en substances polluantes est mise en œuvre, avec du feuillage d'automne séché, son résidu d'extraction ou d'autres déchets solides contenant du carbone, comme de la paille ou des ordures ménagères, sous la forme de briquettes combustibles.

9. Procédé selon la revendication 1 à 8, caractérisé en ce que les cendres obtenues après le brûlage des briquettes combustibles fabriquées à partir de boue de clarification chargée sont à nouveau ajoutées à la suspension de boue de clarification utilisée pour l'épuration de gaz effluent.

10. Procédé selon la revendication 1 à 9, caractérisé en ce que les substances polluantes de la boue de clarification chargée avec celles-ci sont isolées par une calcination réductrice et/ou électrolytiquement.